# EUROPEAN PATENT APPLICATION

(11) **EP 2 412 268 A1**
(43) Date of publication of application: **01.02.2012**
(21) Application number: 11152852.7
(22) Date of filing: 01.02.2011
(51) Int. Cl.: A45C 11/18, A45C 13/42, A45C 13/00, G09F 3/20, A01K 11/00

(54) **Portable identification holder**

(30) Priority: 30.07.2010 TW 099214695
(71) Applicant: Han Lien International Corp., Taipei (TW)
(72) Inventor: Lin, Ralph, Taipei (TW)
(74) Representative: Viering, Jentschura & Partner

(57) **Abstract**

A portable identification holder (100) includes a base (10), a substantially transparent cover (20), a sealing member (40) and a fastener (50). The cover (20) is connected to the base (10) to form a room (S) therein. A card (200) with information is received in the room (S) and read via the cover (20). The sealing member (40) is between the base (10) and the cover (20) surrounding the room (S). The fastener (50) is provided at the base (10) to fasten the base (10) to a specific object (300).

## Description

### BACKGROUND OF THE INVENTION

### 1. Field of the Invention

The present invention relates generally to a device for the use of identification, and more particularly to a portable identification holder.

### 2. Description of the Related Art

In order to find a missing pet, chip injection is a popular way in present days to avoid pets from getting lost. These pets have to be taken to a specific place for scanning in order to find out who the owner is. People may not know where to scan the chips, nor can they be sure if the missing animals they found were injected with chips. The consequence may be that people who found the missing animals will leave them behind without doing anything. In addition, "Will the chip injection harm my pet?" is still a big concern for a lot of pets owners. Some people made an identification card by himself/herself to be hung on their pets. However, the handmade identification card is usually not strong enough that it may be damaged in a short time, such as pets scratching it with their claws.

Except for pet, people may lose personal goods too. Few goods can be identified that it is difficult to return lost goods. For a luggage, people fasten a plastic cover with a name card therein on the luggage for identification. Yet if rain or water wets the name card then people cannot read the information thereon.

### SUMMARY OF THE INVENTION

The primary objective of the present invention is to provide a portable identification holder to be fastened to pets, goods or any other things for identification, which has information that is clear to read and not easy to be damaged.

According to the objective of the present invention, a portable identification holder includes a base, a substantially transparent cover, a sealing member and a fastener. The cover is connected to the base to form a room therein. The sealing member is between the base and the cover surrounding the room. The fastener is provided at the base to fasten the base to a specific object.

In an embodiment, the portable identification holder of present invention further includes a pressing member to be moved by user to disengage the cover from the base.

### BRIEF DESCRIPTION OF THE DRAWINGS

FIG. 1 is an exploded view of a first preferred embodiment of the present invention;
FIG. 2 and FIG. 3 are perspective views of the first preferred embodiment of the present invention;
FIG. 4 is a perspective view of the base of the first preferred embodiment of the present invention;
FIG. 5 is a perspective view of the cover of the first preferred embodiment of the present invention;
FIG. 6 is a sectional view of the 6-6 line in FIG. 2, showing engagement of the cover and the base;
FIG. 7 is a sectional view, showing disengagement of the cover and the base;
FIG. 8 is similar to FIG. 6, showing engagement of the protrusion of the pressing member and the guiding slots of the base;
FIG. 9 is a sectional view of the 9-9 line in FIG. 8, showing engagement of the cover and the base;
FIG. 10 is a sectional view, showing disengagement of the cover and the base;
FIG. 11 is a perspective view of a second preferred embodiment of the present invention, showing the belts;
FIG. 12 and FIG. 13 are perspective views of the second preferred embodiment of the present invention, showing the operation of the belts;
FIG. 14 is a perspective view of a third preferred embodiment of the present invention; and
FIG. 15 is a perspective view, showing the foolproof device.

### DETAILED DESCRIPTION OF THE INVENTION

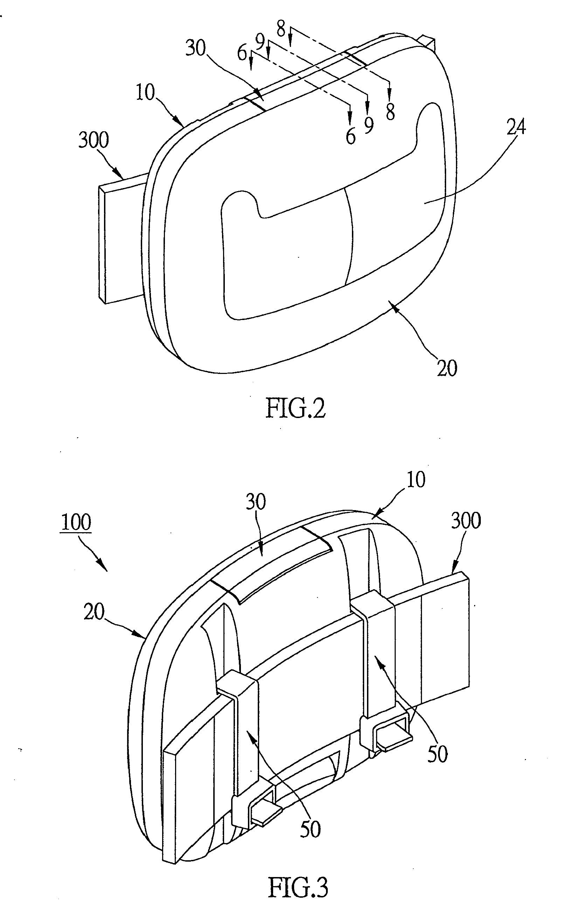

As shown in FIG. 3, a portable identification holder 100 of the first preferred embodiment of the present invention includes a base 10, a cover 20, a pressing member 30, a sealing member 40 and two fasteners 50. The portable identification holder 100 has a room S therein when the base 10 is engaged with the cover 20 to receive a card 200 with some specific information thereon.

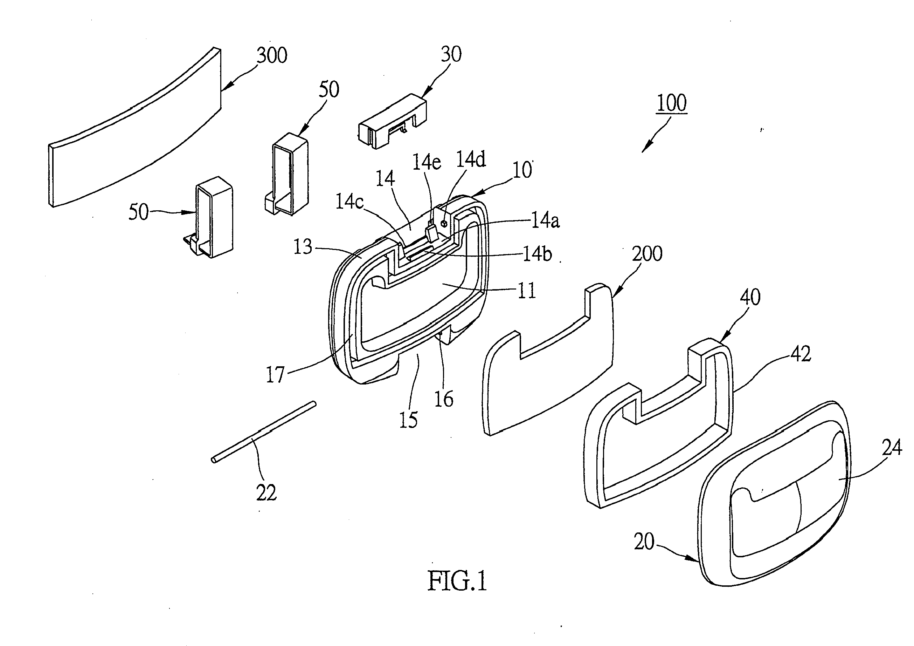

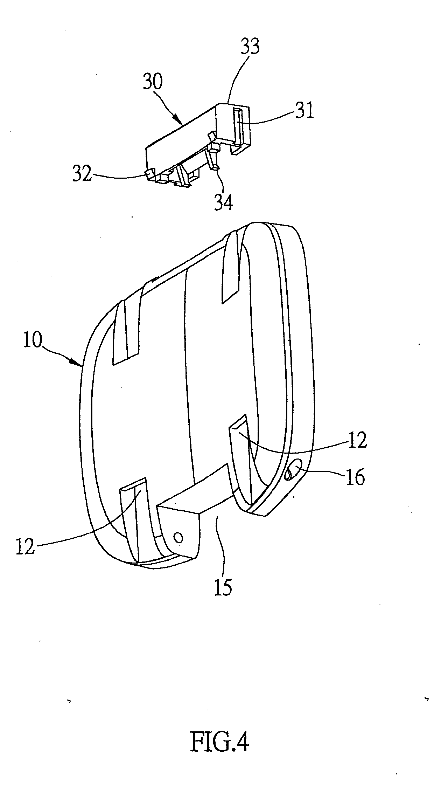

As shown in FIG. 1 and FIG. 4, the base 10 is a plastic shell with a recess 11 at a front side to receive the card 200 therein and two longitudinal through holes 12 at a rear side thereof. The base 10 has an edge side 13 on which a first recess 14 and a second recess 15 are provided. The first recess 14 has a locking device 14b and a stopping device 14c on a bottom 14a thereof and has a guiding devices 14d on each of two opposite sidewalls respectively and has two longitudinal guiding slots 14e, which are closed at tail ends, at a third sidewall. The second recess 15 is opposite to the first recess 14. The base 10 has a transverse through hole 16 passing through the second recess 15. The base 10 further has a slot 17 surrounding the recess 11.

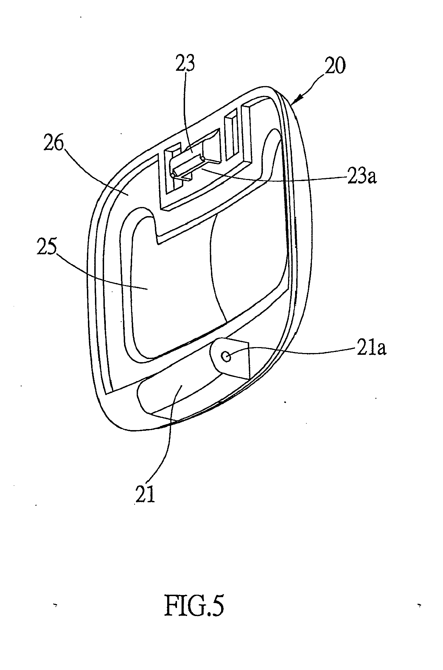

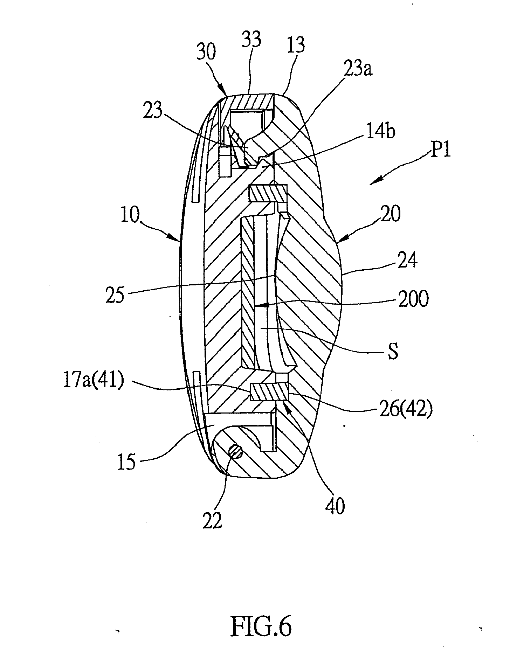

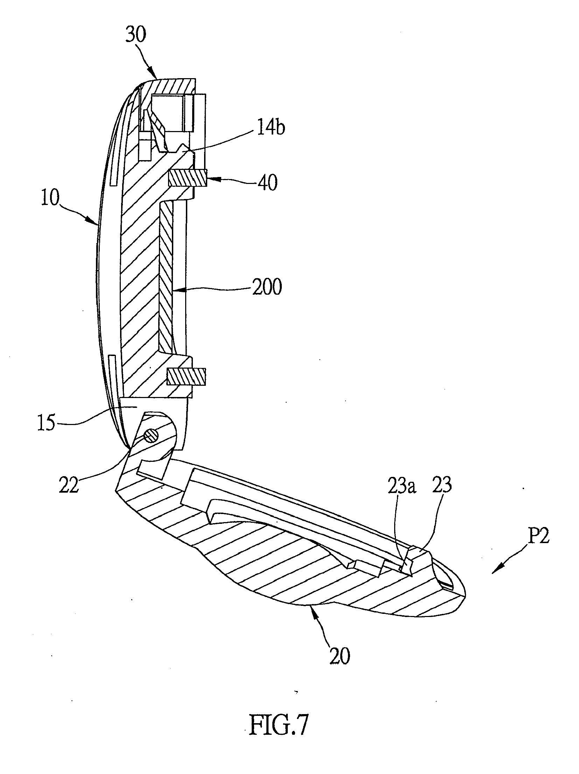

As shown in FIG. 1 and FIG. 5, the cover 20 is transparent and has a connecting member 21 at a bottom of an inner side. The connecting member 21 has a through hole 21a. The connecting member 21 is received in the second recess 15 and a pin 22 passes through the through hole 16 of the base 10 and the through hole 21a of the connecting member 21 to pivot the cover 20 on the base 10 that the cover 20 is moved relative to the base 10 between a closed position P1 (FIG. 6) and an open position (FIG. 7). The cover 20 has a protrusion 23 at the inner side adjacent to a top thereof. The protrusion 23 has a slot 23a at a bottom thereof to be engaged with the locking device 14b of the base 10 when the cover 20 is moved to the closed position P1 to secure the cover 20 at the closed position P1 and close the room S. The cover 20 has a convex curved face 24 at a front side thereof and a convex curved face 25 at the inner side between the connecting member 21 and the protrusion 23. These two curved faces 24, 25 make the cover 20 a convex lens to magnify the characters on the card 200. The cover 20 has a pressing face 26 among the curved face 25, the connecting member 21 and the protrusion 23. The pressing face 26 faces the slot 17 of the base 10.

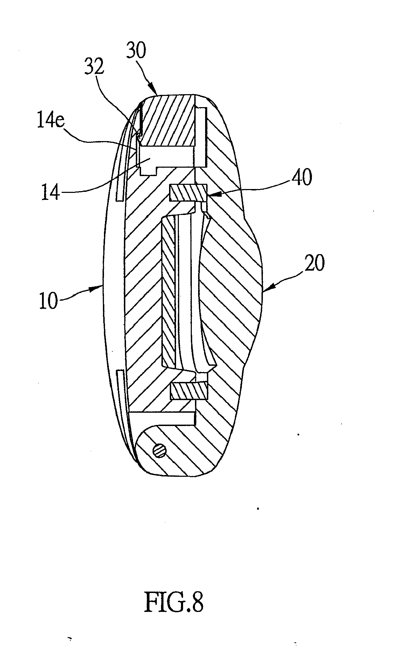

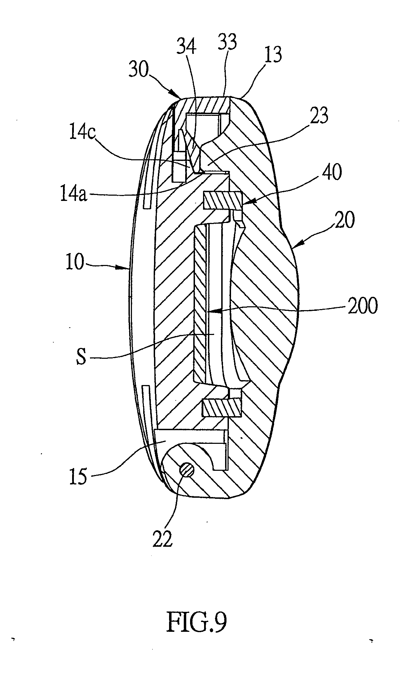

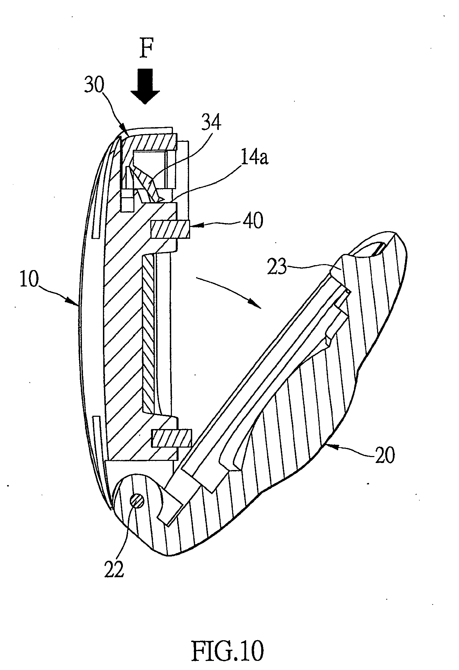

The pressing member 30 is received in the first recess 14 of the base 10, as shown in FIG 4 and FIG 8, and has a slot 31 at each of two opposite sides to be engaged with the guiding devices 14d of the base 10 respectively and two protrusions 32 on a rear side to be engaged with the guiding slots 14e of the base 10 that the pressing member 30 may move up and down and will not leave the base 10. The pressing member 30 has a contact face 33 and a flexible protrusion 34, which is tilted relative to the cover 20. As shown in FIG. 9, the contact face 33 and the edge side 13 of the base 10 are even in a normal condition to prevent someone from touching the pressing member 30 unexpectedly. The protrusion 34 touches the stopping device 14c of the base 10 and is very close to the bottom 14a of the first slot 14 of the base 10. When the pressing member 30 is pressed downward by a force F, as shown in FIG. 10, the protrusion 34 touches the bottom 14a of the first slot 14 by a bottom thereof to move the protrusions 23 of the cover 20 and disengage the locking devices 14a of the base 10 from the slots 13a of the cover 10, as shown in FIG. 7, that the cover 20 may be moved to the open position P2 to replace the card 200 in the room S. The pressing member 30 will be returned to the normal condition by the protrusion 34 when one releases the pressing member 30.

The sealing member 40 is a rubber ring or a silicon rubber ring received in the slot 17 of the base 10. A diameter of the sealing member 40 is greater than a depth of the slot 17 and is greater than a distance between the pressing face 26 of the cover 20 and the bottom 17a of the slot 17 of the base 10 when the cover 20 is moved to the closed position P1 that the sealing member 40 has opposite sides 41 and 42 pressing the bottom 17a of the slot 17 and the pressing face 26 of the cover 20 to seal the room S. Therefore, the card 200 in the room S is well protected from water or other things.

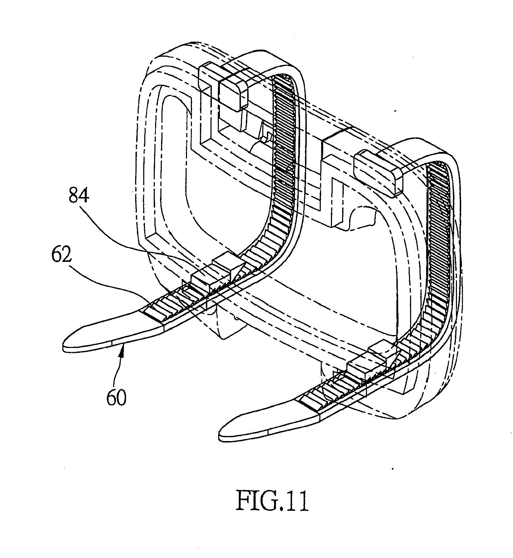

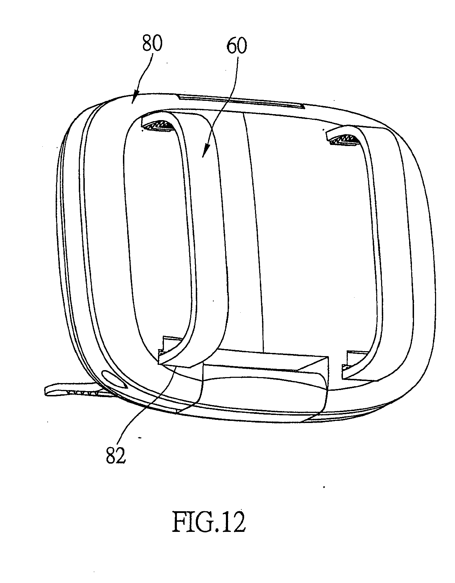

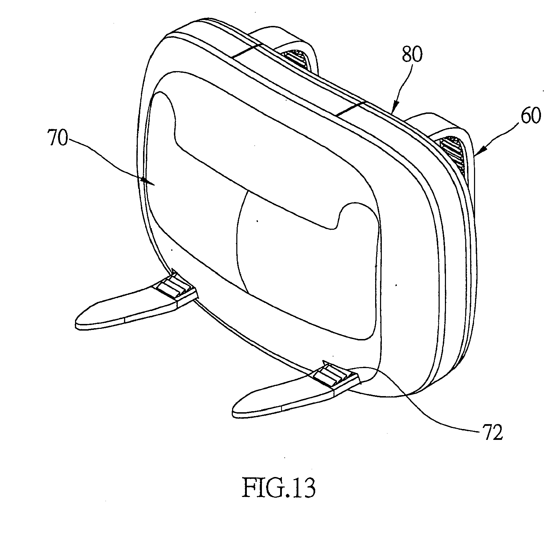

The fasteners 50 are two belts passing through the through holes 12 of the base 10 to fasten the portable identification holder 100 of the present invention to a specific object 300, such as pet's belt and handle of luggage. FIG. 11 to FIG. 13 shows the second preferred embodiment of the present invention, which has two belts 60 with teeth. Each belt 60 has an end fixed to a rear side of a cover 70. The belts 60 may be portions of the cover 70 or independent elements fixed to the cover 70. Distal ends of the belts 60 pass through holes 72, 82 on bottoms of the cover 70 and a base 80. The base 80 is provided with a paw 84 in each of the through hole 82 to be engaged with the teeth 62 of the belts 60, and then cut the residual parts of the belts 60. Any way to fasten the holder to a specific object may be incorporated in the present invention, such as clip, buckle, Velcro and other relative devices.

In the identification holder 100 of the present invention, the card 200 is replaceable, and the lens on the cover 20 may magnify the information on the card 200. The pressing member 30 is not protruded from the base 10 to prevent the pet from unexpectedly touching the pressing member 30 to open the cover 20. The sealing member 40 may prevent water, dirt or other things from going into the holder 100 and protect the card 200 therein.

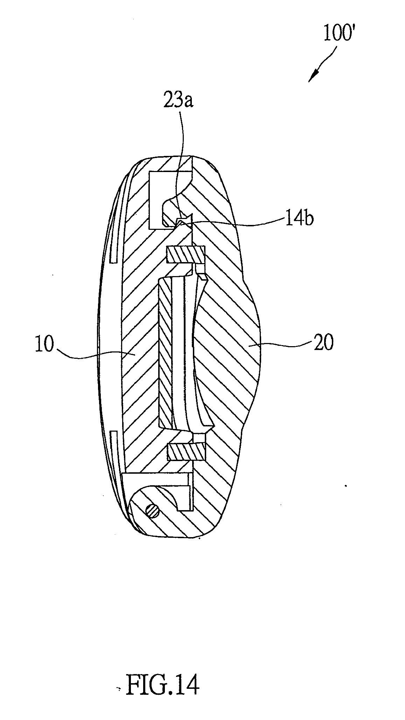

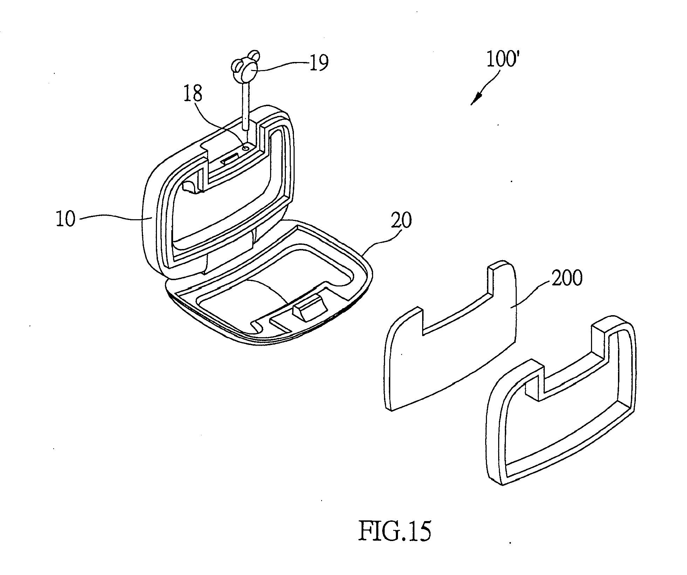

In above preferred embodiments of the present invention, the holder 100 may be opened to replace the card 200. FIG. 14 shows a portable identification holder 100' of the third preferred embodiment of the present invention without the pressing member. The holder 100' provides a slot 23 a on the cover 20 and a locking device 14b on the base 10 to be engaged with the slot 23a and they are unable to disengage. In other words, the holder 100' of the third preferred embodiment is a single element and the card 200 is irreplaceable. The third preferred embodiment further provides a foolproof device to prevent the cover from being closed before the card is put in the room. As shown in FIG. 15, the foolproof device includes a bore 18 on the base 10 and a pin 19 inserted into the bore 18 that the locking device 14b is unable to be engaged with the slot 23a when the pin 19 is in the bore 18. The base 10 and the cover 20 of the holder 100 of the third preferred embodiment are disengaged before they are sold to a user. User buys the holder 100', writes information on the card 200 and puts it in the room S, and then, user pulls the pin 19 out to engage the base 10 and the cover 20.

The description above is a few preferred embodiments of the present invention and the equivalence of the present invention is still in the scope of claim construction of the present invention.

## Claims

1. A portable identification holder (100), comprising:
a base (10);
a cover (20) connected to the base (10) to form a room (S) therein;
a sealing member (40) between the cover (20) and the base (10) and surrounding the room (S); and
at least a fastener (50) connected to the base (10) to fasten the base (10) to a specific object (300).

2. The portable identification holder (100) as defined in claim 1, wherein the cover (20) is pivoted on the base (10) to be moved between a closed position (P1), in which the cover (20) contacts the base (10) to close the room (S), and an open position (P2), in which the cover (20) is separated from the base (10) to open the room (S).

3. The portable identification holder (100) as defined in claim 2, wherein the base (10) has a locking device (14b), and the cover (20) has a slot (23a) to be engaged with the locking device (14b) when the cover (20) is moved to the closed position (P1).

4. The portable identification holder (100) as defined in claim 3, further comprising a pressing member (30), wherein the base (10) has a first recess (14) on an edge side (13) thereof and the locking device (14b) is provided on a bottom (14a) of the first recess (14), and the cover (20) has a protrusion (23) with the slot (23a) on a bottom, and the pressing member (30), which is provided in the first recess (14) to be manipulated for movement, has a protrusion (34) to move the protrusion (23) of the cover (20) when the pressing member (30) is moved to disengage the locking device (14b) of the base (10) from the slot (23a) of the cover (20).

5. The portable identification holder (100) as defined in claim 4, wherein the protrusion (34) of the pressing member (30) is flexible and is tiled relative to the cover (20) to contact the bottom (14a) the first slot (14) of the base (10) by a bottom thereof.

6. The portable identification holder (100) as defined in claim 4, wherein the base (10) has at least a guiding slot (14e), which has an end closed, on a sidewall of the first recess (14), and the pressing member (30) has at least a protrusion (32) to be engaged with the guiding slot (14e) to restrain the pressing member (30) from moving away from the guiding slot (14e).

7. The portable identification holder (100') as defined in claim 2, wherein the base (10) has a bore (18), and a pin (19) is inserted into the bore (18) when the cover (20) is moved to the open position (P2).

8. The portable identification holder (100) as defined in claim 2, wherein the base has a slot (17) surrounding the room (S), the cover (20) has a pressing face (26), and the sealing member (40) is a flexible ring to be received in the slot (17) and having opposite ends (41, 42) contacting a bottom (17a) of the slot (17) and the pressing face (26) of the cover (20) when the cover (20) is moved to the closed position (P1), and a distance between the opposite ends (41, 42) of the sealing member (40) is greater than a distance between the pressing face (26) of the cover (20) and the bottom (17a) of the slot (17) of the base (10) when the cover (20) is moved to the closed position (P1).

9. The portable identification holder (100) as defined in claim 8, wherein the distance between the opposite ends (41, 42) of the sealing member (40) is greater than a depth of the slot (17) of the base (10).

10. The portable identification holder (100) as defined in claim 1, wherein cover (20) is substantially transparent and has a convex curved face (24).

11. The portable identification holder (100) as defined in claim 1, wherein the base (10) has at least a through hole (12), and the fastener (50) is a belt passing through the through hole (12).

12. The portable identification holder (100) as defined in claim 1, wherein the cover (70) has a through hole (72) and the base (80) have at least a through hole (82) respectively, and the fastener is a belt (60) having an end fixed to the base (80) and an opposite end passing through the through holes (72, 82).

13. The portable identification holder (100) as defined in claim 12, further comprising a paw (84) provided in the through hole (82) of the base (80) to be engaged with teeth (62) of the belt (60).
